# EUROPÄISCHE PATENTSCHRIFT

(11) **EP 0 615 088 B1**
(45) Veröffentlichungstag und Bekanntmachung des Hinweises auf die Patenterteilung: **15.10.1997**
(21) Anmeldenummer: 93121050.4
(22) Anmeldetag: 29.12.1993
(51) Int. Cl.: F16K 31/06, F16K 27/00

(54) **Ventileinrichtung, insbesondere für die Pneumatik**
Valve especially for a pneumatic installation
Soupape notamment pour une installation pneumatique

(30) Priorität: 12.03.1993 DE 9303660 U
(43) Veröffentlichungstag der Anmeldung: 14.09.1994
(73) Patentinhaber: Festo KG, D-73734 Esslingen (DE)
(72) Erfinder: Stoll, Kurt, Dipl.-Ing., D-73732 Esslingen (DE)
(74) Vertreter: Abel, Martin, Dipl.-Ing.

(56) Entgegenhaltungen:
- DE-A- 3 322 844
- DE-C- 1 080 830
- DE-U- 1 797 854
- US-A- 3 432 140

## Beschreibung

Die Erfindung betrifft eine Ventileinrichtung, insbesondere für die Pneumatik, mit mindestens einem elektrisch betätigbaren Magnetventil, das ein Ventilgehäuse aufweist, in dem eine Magnetspule angeordnet ist, und das eine der Umgebung zugewandte Außenfläche besitzt, an der zumindest im Bereich der Magnetspule mehrere durch Zwischenräume voneinander getrennte Kühlrippen vorgesehen sind, wobei die zwischen den Kühlrippen vorgesehenen Zwischenräume endseitig offen sind.

Eine Ventileinrichtung dieser Art geht aus der DE-A-33 22 844 hervor. Sie umfaßt ein Magnetventil mit einer in einem Ventilgehäuse aufgenommenen Magnetspule. Die Außenfläche des Ventilgehäuses weist durch Zwischenräume getrennte Rippen auf, die eine Vergrößerung der Gehäuseoberfläche und damit offensichtlich eine verbesserte Wärmeabfuhr bewirken.

Häufig besteht das Erfordernis, Ventileinrichtungen mit mehreren Magnetventilen auszustatten. Hierbei ist regelmäßig ein Fluidverteiler vorhanden, der einen Träger für eine Mehrzahl von Mehrwegeventilen bildet, die mit Magnetventilen als Vorsteuerventile ausgestattet sind. Bei Anordnungen dieser Art, wie sie beispielsweise aus der DE-A-1 080 830 hervorgehen, spricht man auch von Ventilbatterien. Zugunsten kompakter Abmessungen sollten dabei die Magnetventile mit möglichst geringem Abstand nebeneineinander angeordnet werden. Die unmittelbare Nachbarschaft der Magnetventile hat im Betrieb allerdings eine starke Erwärmung zur Folge, was die Funktionsfähigkeit beeinträchtigen kann. Die hohe Temperatur führt unter Umständen zu einer Erweichung der in den Magnetventilen vorgesehenen Dichtgummis, so daß Verformungen auftreten, die die Dichtfunktion beeinträchtigen.

Es ist die Aufgabe der Erfindung, eine Ventileinrichtung der eingangs genannten Art zu schaffen, bei der temperaturbedingte Beeinträchtigungen der Funktionsweise reduziert sind.

Diese Aufgabe wird bei einer Ventileinrichtung der eingangs genannten Art dadurch gelöst, daß mehrere nebeneinander angeordnete Magnetventile vorgesehen sind, wobei die Ventilgehäuse einander benachbarter Magnetventile an den einander zugewandten Außenflächenpartien derart mit Kühlrippen versehen sind, daß sich Kühlrippen und Zwischenräume unter Bildung kanalähnlicher Strömungswege jeweils paarweise gegenüberliegen.

Auf diese Weise stellt sich bei dichtgepackten Mehrfachanordnungen, bei denen Magnetventile auf engstem Raum angeordnet sind, eine erhebliche Verbesserung der Wärmeabfuhr ein. Geht man beispielsweise von einer Anordnung aus, bei der der Abstand zwischen benachbarten Magnetventilen nur einige Zehntel Millimeter beträgt, so führen die zwischen den Kühlrippen vorgegesehenen Zwischenräume zu einer erheblichen Vergrößerung der für die Luftströmung zur Verfügung stehenden Luftspalte und damit zu einer verbesserten Wärmeabfuhr durch Konvektion. Indem sich an den einander zugewandten Außenflächenpartien jeweils paarweise Kühlrippen und Zwischenräume benachbarter Magnetventile gegenüberliegen, entstehen praktisch Luftströmungskanäle mit großem Strömungsquerschnitt, so daß sich eine optimale Wärmeeinfuhr einstellt.

Vorteilhafte Weiterbildungen der Erfindung sind in den Unteransprüchen aufgeführt.

Es ist fertigungstechnisch besonders vorteilhaft, die Kühlrippen einstückig an das Ventilgehäuse anzuformen.

Es ist ferner von Vorteil, wenn trotz vorhandener Kühlrippen die äußeren Abmessungen des jeweiligen Magnetventils nicht über diejenigen konventioneller Magnetventile gleicher Art hinausgehen. Dies begünstigt einen Austausch zu Nachrüstzwecken, denn der benötigte Einbauraum bleibt der gleiche. In diesem Zusammenhang kann mindestens ein Kühlrippen aufweisender gerippter Bereich neben mindestens einem ungerippten und insbesondere glattflächigen Bereich des Ventilgehäuses angeordnet sein, wobei die längsseitigen Stirnflächen der Kühlrippen des gerippten Bereiches und die Oberfläche des angrenzenden ungerippten Bereiches zumindest im wesentlichen in einer gemeinsamen Ebene liegen.

Ein jeweiliges Magnetventil verfügt zweckmäßigerweise über eine Montageseite, mit der voraus es an der Bestückungsfläche eines weiteren Bauteils festlegbar ist. Bei diesem weiteren Bauteil kann es sich beispielsweise um ein Mehrwegeventil handeln, das von dem Magnetventil als Vorsteuerventil beeinflußt wird. Im angebrachten Zustand ragt das Magnetventil von dem betreffenden Bauteil bzw. der Bestückungsfläche weg, und zwar in der Regel im rechten Winkel zu der Bestückungsfläche. Die Richtung des Wegragens sei als Erstreckungsachse bezeichnet, sie wird häufig auch als Befestigungsachse benannt. Bei einer derartigen Anordnung ist es jedenfalls von Vorteil, wenn die Kühlrippen quer und insbesondere rechtwinkelig zu der Erstrekkungsachse verlaufen, so daß die Längsströmung der Luft von dem das Magnetventil tragenden Bauteil nicht behindert wird.

Nachfolgend wird die Erfindung anhand der beigefügten Zeichnung näher erläutert. In dieser zeigen:
- Figur 1: ein erstes Ausführungsbeispiel der Ventileinrichtung im Zusammenhang mit einer sogenannten Ventilinsel bzw. -batterie, wobei mehrere Magnetventile Seite an Seite nebeneinander angeordnet sind,
- Figur 2: einen vergrößerten Ausschnitt der Anordnung aus Figur 1 in Draufsicht gemäß Pfeil II,
- Figur 3: einen vergrößerten Ausschnitt der Anordnung aus Figur 1 in Seitenansicht gemäß Pfeil III, und
- Figur 4: einen Ausschnitt einer weiteren Ausführungsform in Seitenansicht.

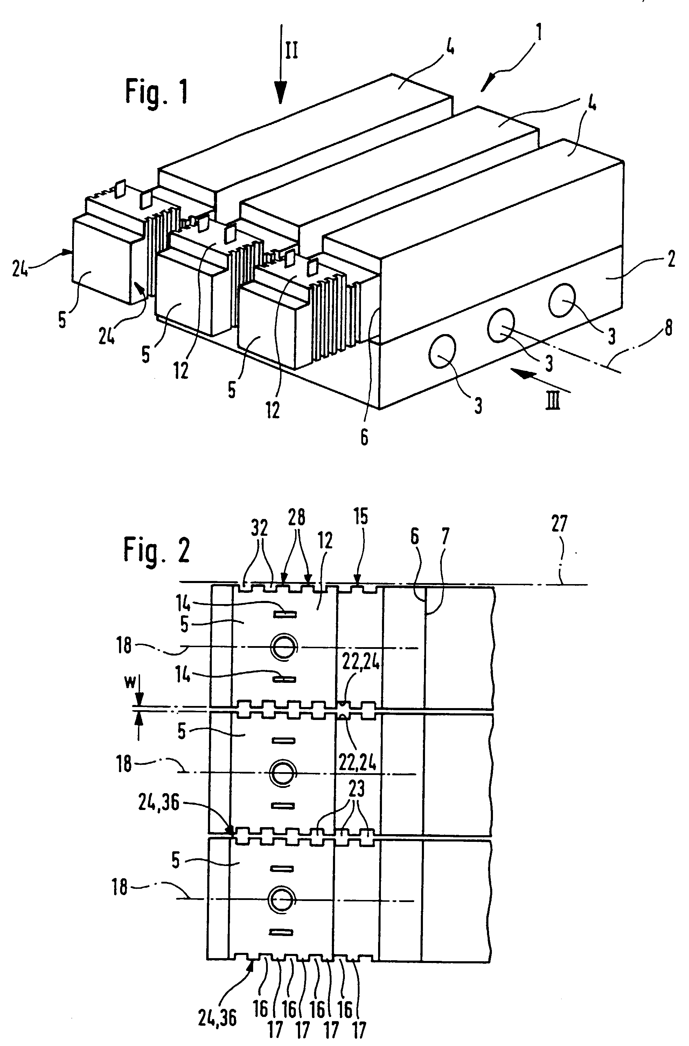

In Figur 1 ist in perspektivischer und teilweise schematischer Darstellung eine als Ventilbatterie oder Ventilinsel bezeichenbare Ventileinrichtung 1 abgebildet. Sie enthält einen platten- oder leistenähnlichen Fluidverteiler 2, der mit internen Druckmittelkanälen 3 ausgestattet ist, die an nicht näher dargestellten Bestückungsplätzen des Fluidverteilers 2 ausmünden. An diesen Bestückungsplätzen sind Mehrwegeventile 4 lösbar festgelegt, beispielsweise 3/2- und/oder 5/2- und/oder 5/3-Wege-ventile. Je nach Schaltstellung sorgen sie beispielsweise für eine Verbindung zwischen einem Versorgungskanal der Druckmittelkanäle 3 und einem nicht näher dargestellten Verbraucherkanal, während gleichzeitig ein anderer Verbraucherkanal mit einem Entlüftungskanal der Durckmittelkanäle 3 kommuniziert.

Die Schaltstellung der Mehrwegeventile 4 wird von elektrisch betätigbaren Magnetventilen 5 beeinflußt. Jedes Mehrwegeventil 4 ist beim Ausführungsbeispiel mit einem solchen Magnetventil 5 ausgestattet. Die Mehrwegeventile 4 sind mit zueinander parallelen Längsachsen in Längsrichtung des Fluidverteilers 2 längsseits aufeinanderfolgend angeordnet, wobei die Magnetventile 5 an jeweils einer der beiden Stirnseiten des jeweils zugeordneten Mehrwegeventils 4 lösbar festgelegt sind. Beispielsgemäß ist die Anordnung so getroffen, daß sämtliche Magnetventile 5 an zur gleichen Seite weisenden Stirnseiten der Mehrwegeventile 4 angeordnet sind. Die entgegensetzten Stirnseiten der Mehrwegeventile 4 sind magnetventillos. Je nach Typ der Mehrwegeventile 4 können aber auch an den unbestückten Stirnseiten Magnetventile vorgesehen sein.

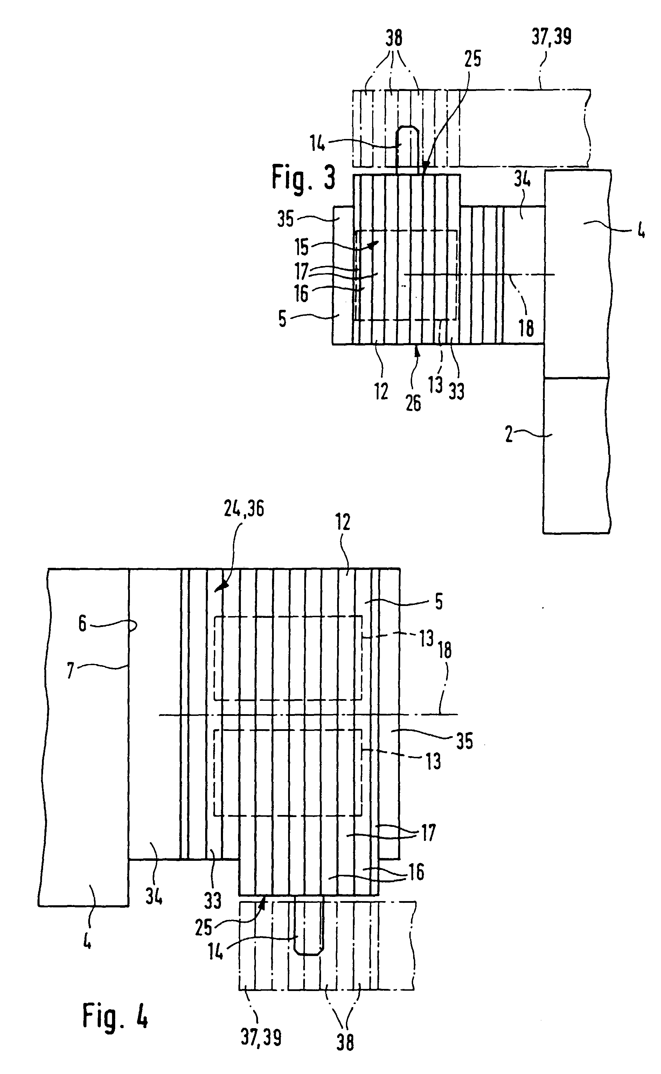

Durch die beispielsgemäße Anordnung ergibt es sich, daß nicht nur Mehrwegeventile 4, sondern auch mehrere Magnetventile 5 in Längsrichtung 8 des Fluidverteilers unmittelbar aufeinanderfolgend zu liegen kommen. Wie die Abbildung 2 verdeutlicht, kann der Abstand zwischen unmittelbar aufeinanderfolgenden Magnetventilen 5 sehr gering sein. Die lichte Weite w des Abstandes beträgt beim Ausführungsbeispiel jeweils etwa 0.2 mm.

Die beim Ausführungsbeispiel als Vorsteuerventile arbeitenden Magnetventile 5 verfügen jeweils über ein Ventilgehäuse 12. In dessen Innern ist eine in Figur 3 strichpunktiert angedeutete Magnetspule 13 angeordnet, die auf nicht näher dargestellte Weise in elektrischer Verbindung mit einer von außen her zugänglichen Steckeinrichtung 14 oder einer sonstigen elektrischen Verbindungseinrichtung steht. Durch Erregung der Magnetspule 13 kann ein nicht näher dargestellter Ventilstößel des Magnetventils 5 bewegt werden, um ein pneumatisches Stellsignal für das jeweils zugeordnete Mehrwegeventil 4 zu erzeugen. Der grundsätzliche funktionelle Aufbau und die Betriebsweise der Magnetventile ist als solches bekannt, so daß sich ein näheres Eingehen an dieser Stelle erübrigt.

Der im Betrieb in der Magnetspule 13 fließende Strom führt zu einer Erwärmung des betreffenden Magnetventils 5. Eine Kühlung erfolgt auf Konvenktionsbasis durch die an der Außenfläche 15 der Ventilgehäuse 12 vorbeistreichende Umgebungsluft. Eine besonders effektive Kühlung verspricht die beispielsgemäße Gestaltung der Ventilgehäuse 12, die an der Außenfläche 15 im Bereich der Magnetspule 13 mehrere durch Zwischenräume 16 von einander getrennte Kühlrippen 17 aufweisen. Auf diese Weise verbleibt der Umgebungsluft auch bei dicht gepackter Anordnung der Magnetventile 5 ein ausreichend großer Strömungsquerschnitt. Erst die Anordnung der Kühlrippen 17 und Zwischenräume 16 gestattet das unmittelbare Aneinanderrücken der Magnetventile 5 wie es in Figur 2 offenbar wird. Bei konventionellen Magnetventilen 5 wäre eine größere lichte Weite w einzuhalten, um wärmebedingte Funktionsstörungen auszuschließen, was insgesamt die Baubreite der gesamten Ventileinrichtung 1 vor allem in Längsrichtung 8 nachteilig vergrößern würde.

Besagte Kühlrippen 17 sind allerdings auch bei Ventileinrichtungen von Vorteil, die ausschließlich aus einem Magnetventil bestehen oder deren Magnetventile mehr oder weniger freistehend angebracht sind. Ein solches Magnetventil 5 ist in Figur 4 gezeigt. Es ist einer erhöhten Wärmeentwicklung ausgesetzt, da in seinem Ventilgehäuse 12 gleichzeitig mehrere Magnetspulen 13 angeordnet sind, hier: zwei Stück. Aber auch bei Magnetventilen mit nur einer einzigen Magnetspule kann die Wärmeentwicklung unter Umständen sehr groß sein, insbesondere wenn die Magnetspulen ein großes Bauvolumen besitzen oder große Stellkräfte zu erzeugen haben.

Die beispielsgemäßen Magnetventile verfügen über eine Montageseite 7, mit der voraus sie an einer Bestückungsfläche 6 des zugeordneten Mehrwegeventils 4 lösbar festgelegt sind. Die Stelle des Mehrwegeventils 4 kann auch ein sonstiges tragendes Bauteil einnehmen, beispielsweise ein vorzusteuerndes Hauptventil anderer Art, ein Fluidverteiler, oder dergleichen. Im montierten Zustand ragt das Magnetventil 5 in Richtung einer Erstreckungsachse 18 von dem es tragenden Bauteils, hier: dem Mehrwegeventil 4, weg, wobei die Erstreckungsachse beim Ausführungsbeispiel parallel zur Längsachse der Mehrwegeventile 4 verläuft.

Bei einer derartigen Anordnung ist es vorteilhaft, wenn die Kühlrippen 17 rechtwinkelig zu der Erstreckungsachse 18 verlaufen, was beim Ausführungsbeispiel der Fall ist. Die vorbeiströmende Luft kann hier längs der Zwischenräume 16 strömen, ohne daß der Eintritt und/oder Austritt bezüglich der endseitig offenen Zwischenräume 16 von dem angrenzenden Mehrwegeventil 4 beeinträchtigt wird.

Kühlrippen 17 sollten insbesondere an denjenigen Außenflächenpartien 22 der Ventilgehäuse 12 vorgesehen sein, die im betriebsbereiten Zustand der Ventileinrichtung 1 einander zugewandt sind. Ist die Anordnung zudem so getroffen, daß sich Kühlrippen 17 und Zwischenräume 16 jeweils aneinandergrenzender Ventilgehäuse 12 unmittelbar gegenüberliegen, so entstehen einzelne kanalähnliche Strömungswege 23 mit verhältnismäßig großem Querschnitt, die es der umgebenden Luft ermöglichen, verhältnismäßig leicht hindurchzuströmen und luftabführend zu wirken.

Prinzipiell ist es natürlich möglich, an allen Außenflächen des Ventilgehäuses 12 Kühlrippen 17 vorzusehen. In der Regel wird es jedoch genügen, die Kühlrippen 17 nur dort anzubringen, wo im Falle des Nichtvorhandenseins eine Beeinträchtigung der Luftströmung zu verzeichnen wäre. Dies sind beim Ausführungsbeispiel der Figuren 1 bis 3 die Bereiche der jeweils einander zugewandten Seitenflächen 24 der Ventilgehäuse 12, wobei ein jeweiliges Ventilgehäuse 12 zwei solcher voneinander abgewandter Seitenflächen 24 besitzt, die parallel zur Erstreckungsachse 18 verlaufen und sich an die Versorgungsseite 25 anschließen, an der sich die Steckeinrichtung 14 für die elektrische Signalversorgung befindet. Diese Versorgungsseite 25 ragt beim Ausführungsbeispiel gemäß Figuren 1 bis 3 nach oben, während sie im Falle der Figur 4 nach unten gerichtet ist. Die Kühlrippen 17 und Zwischenräume 16 laufen an der einen Endseite jeweils zu der Vorsorgungsseite 25 hin aus, während ihre entgegengesetzte Endseite bündig mit der in Figur 3 nach unten weisenden Rückseite 26 des zugeordneten Ventilgehäuses 12 abschließt.

Es ist zweckmäßig, wenn sämtliche vorhandenen Kühlrippen 17 parallel zueinander verlaufen und zudem lineare Erstreckung aufweisen, so daß der entlangströmenden Luft möglichst wenig Widerstand entgegengesetzt wird.

Der Querschnitt der Kühlrippen 17 und Zwischenräume 16 ist zweckmäßigerweise rechteckförmig. Die Rippenbreite und Vertiefungsbreite kann identisch sein.

Die zwischen zwei Seitenflächen 24 eines jeweiligen Magnetventils 5 gemessene Gehäusebreite sollte nicht größer sein als die entsprechend gemessene Baubreite eines vergleichbaren konventionellen Magnetventils. Denkt man sich daher eine Ebene 27, die in der seitlichen Außenfläche des Ventilgehäuses eines konventionellen Magnetventils verläuft, so sollten die längsseitigen Stirnflächen 28 der der entsprechenden Seitenfläche 24 zugeordneten Kühlrippen 17 ebenfalls in dieser Ebene 27 verlaufen oder gar etwas zurückgesetzt sein. Die Zwischenräume 16 erhält man in diesem Fall durch nutartige Längsvertiefungen 32, die in die zugeordnete Außenflächenpartie 22 eingebracht sind. Die zwischen den Vertiefungen 32 verbleibenden Erhebungen bilden die Kühlrippen 17, die vorzugsweise einstückig mit dem Ventilgehäuse 12 ausgeführt sind.

Das beispielsgemäße Ventilgehäuse 12 besitzt ein mittleres Gehäuseteil 33, das zur Montageseite 7 hin von einem Sockel 34 und zur entgegengesetzten Oberseite hin von einem insbesondere deckelartigen Oberteil 35 flankiert wird. Die Kühlrippen 17 und Zwischenräume 16 sind vorzugsweise ausschließlich an dem mittleren Gehäuseteil 33 vorgesehen, das als Kunststoffteil ausgeführt sein kann. Auf diese Weise verfügt das Ventilgehäuse der Figuren 1 bis 4 über zwei mit Kühlrippen 17 versehene gerippte Bereiche 36 an den Seitenflächen 24, die in Richtung der Erstreckungsachse 18 beidseits von jeweils einem ungerippten und glattflächigen Bereich an dem Sockel 34 bzw. dem Oberteil 35 flankiert werden. Die Stirnflächen 28 der Kühlrippen 17 verlaufen hier zweckmäßigerweise in einer gemeinsamen Ebene 27 mit den genannten glattflächigen Bereichen.

Sowohl bei Einfachanordnung als auch bei Mehrfachanordnung sind die Magnetspulen 13 zweckmäßigerweise in dem mittleren Gehäuseteil 33 aufgenommen.

Sofern an der Versorgungsseite 25 ein in Figuren 3 und 4 strichpunktiert angedeutetes elektrisches Verbindungsteil 37 zur elektrischen Signalübertragung vorgesehen ist, dessen Breite in etwa der zwischen den beiden Seitenflächen 24 gemessenen Gehäusebreite entspricht, so ist es zweckmäßig, auch an diesem elektrischen Verbindungsteil 37 nutähnliche Vertiefungen 38 vorzusehen, die sich axial an die Zwischenräume 16 des Ventilgehäuses 12 anschließen, so daß diese Zwischenräume 16 endseitig nicht abgedeckt werden. Die Luft kann dann im Falle des Ausführungsbeispiels gemäß Figur 3 von unten her im Bereich der Rückseite 26 in die Zwischenräume 16 einströmen, sich dann entlang der längsseits offenen Zwischenräume 16 bewegen und nach dem Austritt im Bereich der Versorgungsseite 25 in die nutähnlichen Vertiefungen 38 übergehen, um letztlich vollends nach oben abzuströmen. Vor allem bei einer dicht gepackten Anordnung, wie sie in Figur 2 gezeigt ist, hat eine derartige Anordnung erhebliche Vorteile, da praktisch eine axiale Fortsetzung der Zwischenräume 16 und Strömungswege 23 gewährleistet ist. Bei dem elektrischen Verbindungsteil 37 des Ausführungsbeispiels handelt es sich um ein Steckteil 39, das zur Steckeinrichtung 14 komplementäre Steckmittel aufweist.

## Patentansprüche

1. Ventileinrichtung, insbesondere für die Pneumatik, mit mindestens einem elektrisch betätigbaren Magnetventil (5), das ein Ventilgehäuse (12) aufweist, in dem eine Magnetspule (13) angeordnet ist, und das eine der Umgebung zugewandte Außenfläche (15) besitzt, an der zumindest im Bereich der Magnetspule (13) mehrere durch Zwischenräume (16) voneinander getrennte Kühlrippen (17) vorgesehen sind, wobei die zwischen den Kühlrippen (17) vorgesehenen Zwischenräume (16) endseitig offen sind, dadurch gekennzeichnet, daß mehrere nebeneinander angeordnete Magnetventile (5) vorgesehen sind, wobei die Ventilgehäuse (12) einander benachbarter Magnetventile (5) an den einander zugewandten Außenflächenpartien (22) derart mit Kühlrippen (17) versehen sind, daß sich Kühlrippen (17) und Zwischenräume (16) unter Bildung kanalähnlicher Strömungswege (23) jeweils paarweise gegenüberliegen.

2. Ventileinrichtung nach Anspruch 1, dadurch gekennzeichnet, daß die Kühlrippen (17) und die Zwischenräume (16) lineare Erstreckung aufweisen.

3. Ventileinrichtung nach Anspruch 1 oder 2, dadurch gekennzeichnet, daß die Kühlrippen (17) einstückiger Bestandteil des Ventilgehäuses (12) sind.

4. Ventileinrichtung nach einem der Ansprüche 1 bis 3, dadurch gekennzeichnet, daß das Ventilgehäuse (12) an der Außenfläche (15) nutartige Vertiefungen (32) aufweist, wobei die zwischen benachbarten Vertiefungen (32) liegenden Gehäusepartien die Kühlrippen (17) bilden.

5. Ventileinrichtung nach einem der Ansprüche 1 bis 4, dadurch gekennzeichnet, daß mindestens ein Kühlrippen (17) aufweisender gerippter Bereich (36) neben mindestens einem ungerippten und insbesondere im wesentlichen glattflächigen Bereich (34,35) des Ventilgehäuses (12) angeordnet ist, wobei die längsseitigen Stirnflächen (28) der Kühlrippen (17) mindestens eines gerippten Bereiches (36) und die Oberfläche mindestens eines angrenzenden ungerippten Bereiches (34,35) zumindest im wesentlichen in einer gemeinsamen Ebene (27) liegen.

6. Ventileinrichtung nach einem der Ansprüche 1 bis 5, dadurch gekennzeichnet, daß sämtliche Kühlrippen (17) des Ventilgehäuses (12) parallel zueinander verlaufen.

7. Ventileinrichtung nach einem der Ansprüche 1 bis 6, dadurch gekennzeichnet, daß ein jeweiliges Magnetventil (5) mit einer Montageseite (7) an der Bestückungsfläche (6) eines insbesondere von ihm zu beeinflussenden Bauteils (4) derart festlegbar oder festgelegt ist, daß es von der Bestückungsfläche (6) in Richtung einer Erstreckungsachse (18) wegragt, wobei besagtes Bauteil (4) zweckmäßigerweise ein Mehrwegeventil oder ein Fluidverteiler ist, und wobei die zur Bildung der kanalähnlichen Strömungswege (23) beitragenden Kühlrippen (17) quer oder insbesondere rechtwinkelig zu der Erstreckungsachse verlaufen.

8. Ventileinrichtung nach Anspruch 7, dadurch gekennzeichnet, daß bei an einem Mehrwegeventil (4) angeordnetem Magnetventil (5) die Erstreckungsachse (18) parallel zur Längsachse des Mehrwegeventils (4) verläuft.

9. Ventileinrichtung nach einem der Ansprüche 1 bis 8, dadurch gekennzeichnet, daß das Ventilgehäuse (12) eines jeweiligen Magnetventils (5) eine Versorgungsseite (25) aufweist, an der die Zufuhr der elektrischen Steuersignale erfolgt, und an der zweckmäßigerweise eine elektrische Steckeinrichtung (14) vorgesehen ist, wobei sich an die Versorgungsseite (25) zwei zueinander parallele Seitenflächen (24) anschließen, an denen jeweils mehrere der Kühlrippen (17) vorgesehen sind, und wobei die übrigen Oberflächenbereiche des Ventilgehäuses (12) rippenlos ausgebildet sein können.

10. Ventileinrichtung nach einem der Ansprüche 1 bis 9, dadurch gekennzeichnet, daß das Magnetventil (5) zwei oder mehr Magnetspulen (13) enthält.

11. Ventileinrichtung nach einem der Ansprüche 1 bis 10, dadurch gekennzeichnet, daß ein Fluidverteiler (2) vorgesehen ist, der mittelbar oder unmittelbar eine batterieähnliche Anordnung von mehreren mit Kühlrippen (17) ausgestatteten Magnetventilen (5) trägt, wobei die Magnetventile (5) im Falle einer mittelbaren Anbringung insbesondere an Mehrwegeventilen (4) angebracht sind, die ihrerseits an dem Fluidverteiler (2) sitzen.

12. Ventileinrichtung nach einem der Ansprüche 1 bis 11, dadurch gekennzeichnet, daß das Ventilgehäuse (12) des Magnetventils (5) eine Versorgungsseite (25) aufweist, an der die Zufuhr der elektrischen Signale über ein insbesondere lösbar anbringbares Verbindungsteil (37) erfolgt, wobei das Verbindungsteil in axialer Verlängerung der zwischen den Kühlrippen (17) vorgesehenen Zwischenräume (16) des Ventilgehäuses (12) angeordnete nutähnliche Vertiefungen (38) aufweist.

## Claims

1. Valve unit, in particular for pneumatics, with one or more electrically-actuable solenoid valves (5), with a valve housing (12) in which is mounted a solenoid coil (13), and with an outer surface (15) facing the outside and provided at least in the area of the solenoid coil (13) with several cooling ribs (17) separated from one another by intermediate spaces (16), wherein the intermediate spaces (16) between the cooling ribs (17) are open at the ends, characterized in that several solenoid valves (5) are provided adjacent to one another, with the valve housings (12) of adjacent solenoid valves (5) being provided with cooling ribs (17) on the sections (22) of the outer surface facing one another in such a way that cooling ribs (17) and intermediate spaces (16) lie opposite one another in pairs forming duct-like channels (23).

2. Valve unit according to claim 1, characterized in that the cooling ribs (17) and the intermediate spaces (16) extend linearly.

3. Valve unit according to claim 1 or 2, characterized in that the cooling ribs (17) are a one-piece integral part of the valve housing (12).

4. Valve unit according to any of claims 1 to 3, characterized in that the valve housing (12) has slot-like recesses (32) on the outer surface (15), with the housing sections lying between adjacent recesses (32) forming the cooling ribs (17).

5. Valve unit according to any of claims 1 to 4, characterized in that at least one ribbed area (36) with cooling ribs (17) is located next to at least one unribbed and in particular smooth area (34, 35) of the valve housing (12), with the long-side end faces (28) of the cooling ribs (17) of at least one ribbed area (36) and the surface of at least one adjacent unribbed area (34, 35) lying at least essentially in a common plane (27).

6. Valve unit according to any of claims 1 to 5, characterized in that all cooling ribs (17) of the valve housing (12) run parallel to one another.

7. Valve unit according to any of claims 1 to 6, characterized in that one mounting side (7) of a particular solenoid valve (5) may be or is attached to the mounting surface (6) of a component (4), in particular one which it is to influence, in such a way that it extends from the mounting surface (6) along an extension axis (18), with the said component (4) expediently being a multiway valve or a fluid distributor, and with the cooling ribs (17) which contribute to the formation of the duct-like channels (23) running transversely or in particular at right-angles to the extension axis.

8. Valve unit according to claim 7, characterized in that, in the case of a solenoid valve (5) mounted on a multiway valve (4), the extension axis runs parallel to the longitudinal axis of the multiway valve (4).

9. Valve unit according to any of claims 1 to 8, characterized in that the valve housing (12) of any particular solenoid valve (5) has a feed side (25) at which the electrical control signals are supplied and at which an electrical coupler (14) is expediently provided, wherein two side faces parallel to one another, on each of which several of the cooling ribs (17) are provided, connect at the feed side (25), and wherein the other surface areas of the valve housing (12) may be designed without ribs.

10. Valve unit according to any of claims 1 to 9, characterized in that the solenoid valve (5) contains two or more solenoid coils (13).

11. Valve unit according to any of claims 1 to 10, characterized in that there is provided a fluid distributor which directly or indirectly carries a battery-like arrangement of several solenoid valves (5) equipped with cooling ribs (17), wherein the solenoid valves (5) if directly attached are in particular attached to multiway valves (4) which in turn rest on the fluid distributor (2).

12. Valve unit according to any of claims 1 to 11, characterized in that the valve housing (12) of the solenoid valve (5) has a feed side (25) at which the electrical signals are supplied via a connection element (37) attachable in particular releasably, with the connection element having slot-like recesses (38) arranged in the axial extension of the intermediate spaces (16) of the valve housing (12) provided between the cooling ribs (17).

## Revendications

1. Dispositif à vannes, destiné en particulier à une application pneumatique, comportant au moins une vanne magnétique (5) actionnable électriquement, qui présente une cage de vanne (12), dans laquelle est placée une bobine magnétique (13), et qui possède une face extérieure (15) orientée vers l'environnement, sur laquelle sont prévues, au moins dans la zone de la bobine magnétique (13), plusieurs nervures de refroidissement (17) séparées par des interstices (16), les interstices (16) prévus entre les nervures de refroidissement (17) étant ouverts à leurs extrémités, caractérisé en ce que sont prévues plusieurs vannes magnétiques, placées côte-à-côte, les cages de vannes (12) de vannes magnétiques (5) adjacentes étant pourvues, sur leurs parties formant faces extérieures (22), orientées les unes vers les autres, de nervures de refroidissement (17) de telle sorte que les nervures de refroidissement (17) et les interstices (16) sont situés en regard les uns des autres, par paires, en formant des parcours d'écoulement (23) semblables à des canaux.

2. Dispositif à vannes selon la revendication 1, caractérisé en ce que les nervures de refroidissement (17) et les interstices (16) présentent une extension linéaire.

3. Dispositif à vannes selon la revendication 1 ou 2, caractérisé en ce que les nervures de refroidissement (17) font partie intégrante de la cage de vanne (12).

4. Dispositif à vannes selon l'une des revendications 1 à 3, caractérisé en ce que la cage de vanne (12) présente, sur sa face extérieure (15), des évidements (32) du type rainures, les parties de cage situées entre les évidements (32) adjacents constituant les nervures de refroidissement (17).

5. Dispositif à vannes selon l'une des revendications 1 à 4, caractérisé en ce qu'au moins une zone nervurée (36), présentant des nervures de refroidissement (17), est située à côté d'au moins une zone (34, 35) de la cage de vanne (12) qui est sans nervures et qui présente, en particulier, une surface sensiblement lisse, les faces frontales (28) longitudinales des nervures de refroidissement (17) d'au moins une zone nervurée (36) et la surface d'au moins une zone sans nervures (34, 35) adjacente étant situées, au moins sensiblement, dans un même plan (27).

6. Dispositif à vannes selon l'une des revendications 1 à 5, caractérisé en ce que toutes les nervures de refroidissement (17) de la cage de vanne (12) sont parallèles les unes aux autres.

7. Dispositif à vannes selon l'une des revendications 1 à 6, caractérisé en ce que chaque vanne magnétique (5), par une face de montage (7), est susceptible d'être fixée ou est fixée, sur la face d'équipement (6) d'un composant (4) devant en particulier subir son influence, de telle sorte qu'elle dépasse de la face d'équipement (6) dans la direction d'un axe d'extension (18), le composant (4) en question étant avantageusement une vanne à plusieurs voies ou un distributeur de fluide, et les nervures de refroidissement (17) contribuant à la formation des parcours d'écoulement (23) du type canaux s'étendant transversalement ou, en particulier, à angle droit, par rapport à l'axe d'extension.

8. Dispositif à vannes selon la revendication 7, caractérisé en ce que, dans le cas d'une vanne magnétique (5) montée sur une vanne à plusieurs voies (4), l'axe d'extension (18) s'étend parallèlement à l'axe longitudinal de la vanne à plusieurs voies (4).

9. Dispositif à vannes selon l'une des revendications 1 à 8, caractérisé en ce que la cage de vanne (12) de chaque vanne magnétique (5) présente une face d'alimentation (25) au niveau de laquelle se trouve l'arrivée des signaux de commande électriques, et au niveau de laquelle est avantageusement prévu un dispositif enfichable (14) électrique, deux faces latérales (24) parallèles l'une à l'autre faisant suite à la face d'alimentation (25), sur lesquelles sont respectivement prévues plusieurs des nervures de refroidissement (17), et les autres zones de surface de la cage de vanne (12) pouvant ne pas présenter de nervures.

10. Dispositif à vannes selon l'une des revendications 1 à 9, caractérisé en ce que la vanne magnétique (5) contient deux ou plusieurs bobines magnétiques (13).

11. Dispositif à vannes selon l'une des revendications 1 à 10, caractérisé en ce qu'est prévu un distributeur de fluide (2) qui porte, indirectement ou directement, un ensemble, semblable à une batterie, de plusieurs vannes magnétiques (5) pourvues de nervures de refroidissement (17), les vannes magnétiques (5), en cas de montage indirect, étant disposées en particulier sur des vannes à plusieurs voies (4), qui s'appliquent, quant à elles, contre le distributeur de fluide (2).

12. Dispositif à vannes selon l'une des revendications 1 à 11, caractérisé en ce que la cage de vanne (12) de la vanne magnétique (5) présente une face d'alimentation (25), au niveau de laquelle l'arrivée des signaux électriques s'effectue par l'intermédiaire d'un élément de liaison (37) susceptible d'être monté en particulier de façon détachable, l'élément de liaison présentant des évidements (38) du type rainures situés dans le prolongement axial des interstices (16) de la cage de vanne (12) prévus entre les nervures de refroidissement (17).
